Europäisches Patentamt

European Patent Office

Office européen des brevets

(19)

(11) Numéro de publication: **0 177 842**
**B1**

(12) FASCICULE DE BREVET EUROPEEN

(45) Date de publication du fascicule du brevet:
27.09.89

(51) Int. Cl.⁴: **F02M 31/16**

(21) Numéro de dépôt: 85112190.5

(22) Date de dépôt: 26.09.85

(54) Dispositif pour le rechauffage du combustible de moteurs diesel.

(30) Priorité: 03.10.84 FR 8415170

(43) Date de publication de la demande:
16.04.86 Bulletin 86/16

(45) Mention de la délivrance du brevet:
27.09.89 Bulletin 89/39

(84) Etats contractants désignés:
BE CH DE GB IT LI NL SE

(56) Documents cités:
CA-A- 1 101 284
DE-A- 3 126 773
FR-A- 416 756
FR-A- 495 398
FR-A- 1 214 097
FR-A- 1 561 386
FR-A- 1 561 386
FR-A- 2 458 026
FR-A- 2 541 377
US-A- 1 574 675
US-A- 2 658 729
US-A- 4 218 999

(73) Titulaire: MOURGEON INDUSTRIE ET ENGINEERING
S.A., 15, Rue Gay Lussac Zone Industrielle,
F-94430 Chennevieres Sur Marne(FR)

(72) Inventeur: Mourgeon, Jean-Claude, 59 Rue Colbert,
F-77330 Ozoir-La-Ferrière(FR)

(74) Mandataire: Casalonga, Alain et al, BUREAU D.A.
CASALONGA - JOSSE Morassistrasse 8,
D-8000 München 5(DE)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

Les moteurs Diesel, notamment ceux destinés à la propulsion des véhicules industriels, utilisent un combustible issu de la distillation du pétrole et comportant une assez forte proportion de produits paraffiniques. Ces produits ont tendance, à des températures inférieures à 0°, à former des cristaux de paraffine à une température dite Point de Trouble, puis à une température plus basse, généralement aux environs de −7° la concentration et la taille des cristaux deviennent telles que, au maillage usuel, les filtres sont bouchés ce qui provoque l'arrêt du moteur. Aux températures inférieures à −10° il peut se produire un phénomène de gélification, provoquant l'arrêt des clapets de la pompe d'alimentation.

On connaît déjà, notamment d'après le document US-A 4 218 999, un dispositif de réchauffage de combustible par circulation d'eau comprenant un tube métallique à ailette extérieure hélicoïdale enfermé dans une enveloppe métallique cylindrique avec fonds et embouts de raccordement, le tout étant assemblé par soudure. Cependant, étant donné qu'un tel dispositif est par nature destiné à fonctionner à de très basses températures, et que le réchauffage souhaité ne peut avoir lieu efficacement que si le tube intérieur est à une température nettement plus élevée que l'enveloppe, il en résulte des phénomènes de dilatation qui, combinés avec la fragilisation à froid des soudures, conduisent rapidement à une perte d'étanchéité interdisant le fonctionnement du véhicule par mélange d'eau dans le gazole ou de gazole dans le circuit de refroidissement.

L'invention vise des appareils de réchauffage de combustible de ce type par apport de calories extérieures, essentiellement constituées par des échangeurs utilisant l'eau, des résistances électriques, ou un circuit d'huile ou une combinaison de ces moyens. Elle vise des moyens permettant d'améliorer l'échange thermique par un effet de brassage mécanique, qui assure déjà par lui-même un effet de fluidification et dont l'apport thermique permet de multiplier le résultat obtenu dans des proportions telles que la limite d'opérabilité se trouve abaissée par exemple de −7° à −20° pour un appareil d'une puissance de 150 W, soit un décalage de 13° vers le bas, mais il est possible d'atteindre des températures de −40 à −50°.

L'invention concerne un appareil de réchauffage de combustible pour moteur Diesel comportant plusieurs tubes d'apport thermique (3, 4) disposés chacun coaxialement dans une chambre cylindrique individuelle (2) d'un diamètre supérieur à celui du tube d'apport thermique correspondant (3, 4) de manière à ménager entre eux un passage annulaire pour le combustible, chaque chambre (2) étant constituée par un tronçon de tube enveloppe entourant le tube d'apport thermique (3, 4), avec des cloisons hélicoïdales disposées dans les passages annulaires entre les tubes d'apport thermique et les tubes enveloppe, un au moins des tubes d'apport thermique (3, 4) étant alimenté par l'eau de refroidissement du moteur.

Conformément à l'invention, l'appareil comporte en outre:

– deux culasses principales d'extrémités (1, 8, 25, 30) munies d'alésages épaulés et de joints d'étanchéité recevant, de manière étanche et à libre dilatation et contraction axiales, lesdits tubes d'apport thermique et lesdits tubes enveloppe, chacune des culasses principales comprenant dans sa face en regard de l'autre culasse principale des raccordements étanches d'entrée pour les tubes enveloppe ainsi que pour les tubes d'apport thermique (3, 4) et sur sa face opposée des raccordements étanches de sortie pour les tubes d'apport thermique (3, 4);

– deux culasses secondaires (7, 9) placées du côté extérieur des culasses principales (8, 1) et munies d'alésages et de joints pour le raccordement étanche et à libre dilatation et contraction également de celui ou de ceux des tubes d'apport thermique (3, 4) qui sont à circulation d'eau, chaque culasse secondaire étant séparée de la culasse principale correspondante par un espace libre ouvert empêchant en cas d'avarie le mélange d'eau avec le combustible.

De plus, lorsque l'élément chauffant utilise l'eau de refroidissement du moteur thermique, le tube intérieur dans lequel elle circule est lui-même de préférence subdivisé en deux volumes égaux par une cloison spiralée qui permet d'augmenter l'échange thermique entre l'eau et la paroi du tube.

L'invention sera maintenant décrite en se référant à titre d'exemple à des formes de réalisation représentées au dessin annexé et dans lequel:

la figure 1 est une vue de dessus en coupe avec arrachement partiel d'un appareil réchauffeur par circulation d'eau;

la figure 2 est une vue en bout en élévation selon la flèche F₁ de la figure 1;

la figure 3 est une vue de dessus en coupe avec arrachement partiel d'un appareil réchauffeur mixte par électricité et circulation d'eau;

la figure 4 est une vue en bout en élévation selon la flèche F₃ de la figure 3.

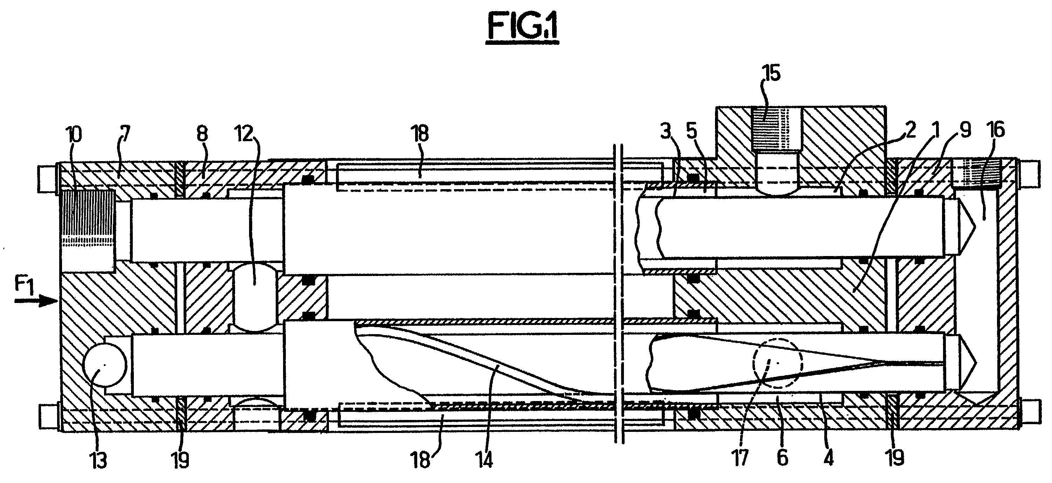

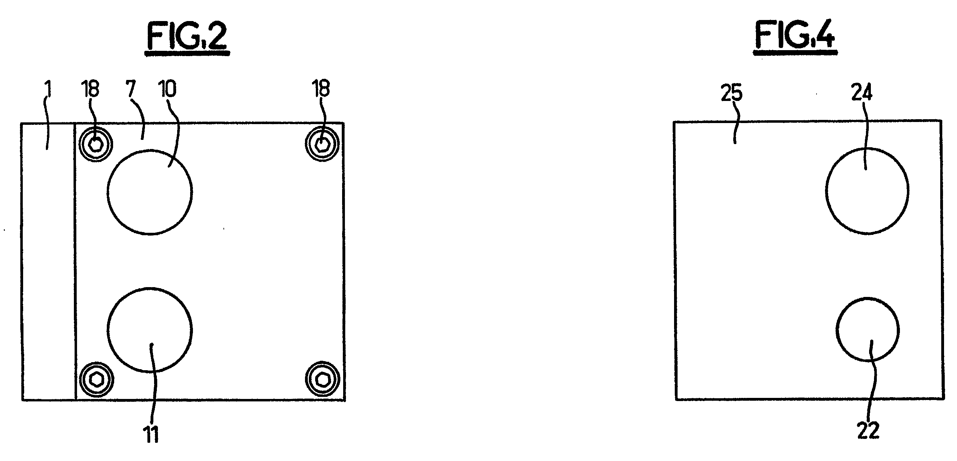

Selon une première forme de réalisation schématiquement représentée aux figures 1 et 2, l'appareil échangeur est alimenté thermiquement par l'eau de refroidissement du moteur. Il est constitué d'un corps 1 percé d'alésages superposés 2, deux étant disposés parallèlement dans une rangée supérieure, les deux autres étant disposés à l'aplomb des deux premiers dans une rangée inférieure. Ces alésages reçoivent des tubes intérieurs tels que 3, 4 concentriques laissant un espace libre 5, 6 destiné a la circulation du combustible. Aux extrémités, des culasses 7, 8, 9 sont percées d'orifices convenables qui, dans la culasse 7, permettent l'entrée et le départ de l'eau par les orifices 10, 11 ; la culasse 8 met en communication entre elles les deux chambres 5 et 6 de passage du combustible de la rangée supérieure, et d'autre part les deux chambres de la rangée inférieure par des perçages tels que 12. Le perçage 13 permet le passage de l'eau ayant circulé dans le tube 4 vers le tube de l'alésage inférieur. La culasse 9 permet à l'autre extrémité le passage de l'eau d'un tube d'une rangée à l'autre tube de la même rangée.

Selon une des caractéristiques de l'invention, chacun des tubes d'eau sont entourés extérieurement d'une cloison hélicoïdale 14, de sorte que les chambres annulaires de circulation du combustible sont délimitées de manière à contraindre le combustible à adopter un trajet hélicoïdal le long des tubes échangeurs. Enfin, une entrée du combustible est prévue latéralement en 15, alors que la sortie s'effectue par un orifice situé en dessous en communication avec la chambre de la rangée inférieure.

Ainsi, l'eau venant du circuit de refroidissement du moteur pénètre dans le bloc par l'entrée 10, passe à travers le tube 3 jusqu'à la culasse opposée 9 où elle pénètre par le passage 16 jusqu'au tube 4 contigu, et traverse le tube 4 jusqu'au perçage 13 par où elle parvient au tube inférieur et où elle décrit un trajet analogue à l'étage inférieur, pour ressortir par la sortie 11.

De son côté, le combustible arrivant par la tubulure 15 circule hélicoïdalement dans la chambre 5 autour du tube 3. Il parvient jusqu'à la culasse 8 où, par le perçage 12, il arrive dans la chambre contiguë 6 où il circule hélicoïdalement jusqu'à un perçage 17, où il passe dans la chambre située immédiatement en dessous. De là il revient vers la culasse 8 et, par un perçage analogue, au perçage 12, il passe dans une chambre contiguë où il circule hélicoïdalement pour parvenir à une sortie située à l'aplomb et en dessous de l'entrée 15.

Des joints en Téflon convenablement répartis assurent une étanchéité absolue sur une plage de température étendue. Le corps 1 et les différentes culasses sont assemblés par des tirants 18 et des écrous. Des plaques d'entretoises 19 sont insérées entre les culasses et le corps et entre les culasses elles-mêmes, pour éviter qu'en cas d'avarie l'eau ne puisse se mélanger au combustible.

Dans un tel appareil, le réchauffage par convection et le brassage dû à la circulation hélicoïdale coopèrent pour permettre un échange plus rapide et plus efficace.

On doit naturellement comprendre qu'à la fois les pompes de circulation et les filtres sont prévus pour assurer une circulation suffisante pendant le temps nécessaire au réchauffage de l'eau de refroidissement jusqu'à la température nécessaire.

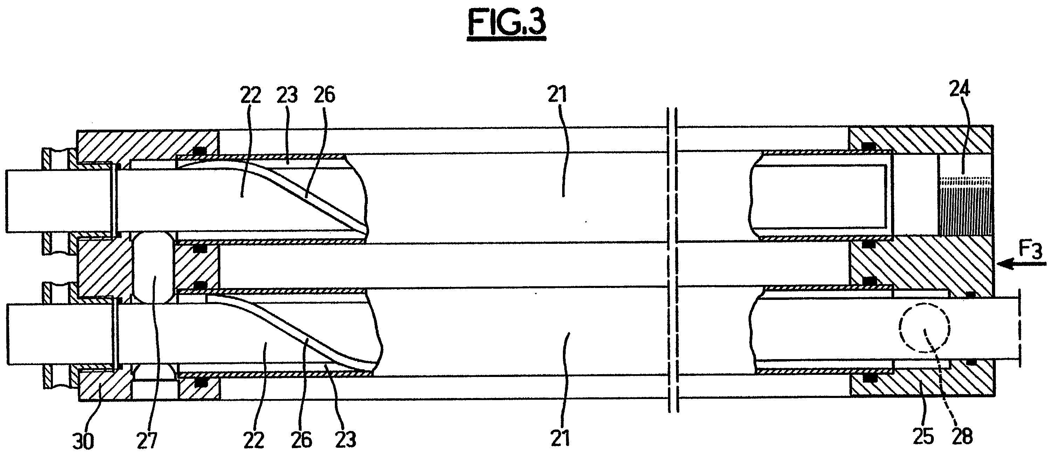

Lorsqu'on dispose d'une énergie électrique suffisante, le réchauffage au moins partiellement peut s'effectuer par des résistances électriques. Un tel appareil mixte a été représenté aux figures 3 et 4.

La disposition générale est la même que pour l'appareil précédemment décrit, mais deux tubes d'eau ont été remplacés par des résistances électriques blindées 21, disposées dans deux alésages superposés. Les deux autres alésages sont traversés par des tubes d'eau 22.

Les chambres annulaires 23 formées entre les alésages et les tubes d'eau ou les résistances constituent les passages du combustible, qui pénètre dans l'appareil à une extrémité par un perçage 24 de la culasse 25.

Comme précédemment, les chambres entre les tubes d'eau et les résistances sont munies d'enroulements hélicoïdaux 26 qui ferment totalement le passage annulaire et obligent ainsi le combustible à circuler suivant un parcours hélicoïdal, ce qui provoque un brassage en même temps qu'une turbulence dans l'écoulement.

Le combustible après avoir pénétré en 24 circule le long de la résistance électrique 21, puis passe par le perçage 27 pour pénétrer dans le passage entourant le tube d'eau jusqu'à l'autre extrémité où, par un perçage 28 dans la culasse 25, il descend dans l'alésage inférieur puis revient par le deuxième alésage inférieur jusqu'à une sortie située en dessous de l'arrivée 24.

Les tubes d'eau qui traversent de part en part les culasses d'extrémité 25 et 30 sont raccordés séparément à des tubulures d'arrivée et de départ non représentées.

Il est également possible de réaliser l'apport thermique uniquement par des résistances électriques. Un tel appareil dérive aisément du précédent et ne nécessite pas une description particulière.

**Revendications**

1. Appareil de réchauffage de combustible pour moteur Diesel comportant plusieurs tubes d'apport thermique (3, 4) disposés chacun coaxialement dans une chambre cylindrique individuelle (2) d'un diamètre supérieur à celui du tube d'apport thermique correspondant (3, 4) de manière à ménager entre eux un passage annulaire pour le combustible, chaque chambre (2) étant constituée par un tronçon de tube enveloppe entourant le tube d'apport thermique (3, 4), avec des cloisons hélicoïdales disposées dans les passages annulaires entre les tubes d'apport thermique et les tubes enveloppe, un au moins des tubes d'apport thermique (3, 4) étant alimenté par l'eau de refroidissement du moteur, caractérisé par le fait que l'appareil comporte en outre:
   – deux culasses principales d'extrémités (1, 8, 25, 30) munies d'alésages épaulés et de joints d'étanchéité recevant, de manière étanche et à libre dilatation et contraction axiales, lesdits tubes d'apport thermique et lesdits tubes enveloppe, chacune des culasses principales comprenant dans sa face en regard de l'autre culasse principale des raccordements étanches d'entrée pour les tubes enveloppe ainsi que pour les tubes d'apport thermique (3, 4) et sur sa face opposée des raccordements étanches de sortie pour les tubes d'apport thermique (3, 4), et
   – deux culasses secondaires (7, 9) placées du côté extérieur des culasses principales (8, 1) et munies d'alésages et de joints pour le raccordement étanche et à libre dilatation et contraction également de celui ou de ceux des tubes d'apport thermique (3, 4) qui sont à circulation d'eau, chaque culasse secondaire étant séparée de la culasse principale correspondante par un espace libre ouvert empêchant en cas d'avarie le mélange d'eau avec le combustible.

2. Appareil selon la revendication 1, caractérisé par le fait que ceux des tubes d'apport thermique qui sont à circulation d'eau sont munis intérieurement d'une ou plusieurs cloisons spiralées pour augmenter l'échange thermique.

## Claims

1. Fuel heater device for Diesel engines, comprising several heat supply tubes (3, 4) each arranged coaxially in an individual cylindrical chamber (2) having a diameter greater than that of the corresponding heat supply tube (3, 4) so as to form between them an annular passage for the fuel, each chamber (2) consisting of a section of jacket tube surrounding the heat supply tube (3, 4), with some spiral partitions arranged in the annular passages between the heat supply tubes and the jacket tubes, one at least of the heat supply tubes (3, 4) being supplied with engine cooling water, characterised by the fact that the device further comprises:
- two main end heads (1, 8, 25, 30) provided with stepped bores and sealing gaskets receiving, without leakage and with freedom to expand and contract axially, the said heat supply tubes and the said jacket tubes, each of the main heads comprising in its face facing the other main head some sealed inlet connections for the jacket tubes and also for the heat supply tubes (3, 4) and on its opposite face some sealed outlet connections for the heat supply tubes (3, 4), and
- two secondary heads (7, 9) placed on the outer side of the main heads (8, 1) and provided with bores and seals for the connection without leakage and with freedom equally to expand and contract as that or those of the heat supply tubes (3, 4) which are for circulation of water, each secondary head being separated from the corresponding main head by an open free space preventing in the case of damage water from mixing with the fuel.

2. Device according to claim 1, characterised by the fact that those of the heat supply tubes which are for water circulation are internally provided with one or several spiral partitions to increase the exchange of heat.

## Patentansprüche

1. Vorrichtung zum Anwärmen von Kraftstoff für Dieselmotoren, die mehrere Wärmezuführrohre (3, 4) aufweist, die jeweils koaxial in einer eigenen zylindrischen Kammer (2) mit größerem Durchmesser als dem des zugehörigen Wärmezuführrohres (3, 4) derart angeordnet sind, daß zwischen ihnen ein ringförmiger Durchlaß für den Kraftstoff gebildet ist, wobei jede Kammer (2) durch einen Abschnitt eines das Wärmezuführrohr (3, 4) umgebenden Mantelrohres gebildet ist, und in den ringförmigen Durchlässen zwischen den Wärmezuführrohren (3, 4) und den Mantelrohren schraubenförmige Trennwände angeordnet sind und wenigstens eines der Wärmezuführrohre (3, 4) mit Kühlwasser des Motors gespeist ist, dadurch gekennzeichnet, daß die Vorrichtung außerdem aufweist:
- zwei endseitige Hauptbodenstücke (1, 8, 25, 30), die mit Stufenbohrungen und mit Dichtungen versehen sind, die abgedichtet sowie zur ungehinderten axialen Ausdehnung und Kontraktion die Wärmezuführrohre und die Mantelrohre aufnehmen, wobei jedes der Hauptbodenstücke in seiner dem anderen Hauptbodenstück zugewandten Seite abgedichtete Eintritts-Verbindungsstellen für die Mantelrohre sowie für die Wärmezuführrohre (3, 4) und auf der gegenüberliegenden Seite abgedichtete Austritts-Verbindungsstellen für die Wärmezuführrohre (3, 4) aufweist und
- zwei sekundäre Bodenstücke (7, 9), die an der Außenseite der Hauptbodenstücke (8, 1) angeordnet sowie mit Bohrungen und Dichtungen zur abgedichteten Verbindung sowie zur ungehinderten Ausdehnung und Kontraktion auch desjenigen oder derjenigen Wärmezuführrohre(s) (3, 4) versehen sind, die zu dem Wasserkreislauf gehören, wobei jedes sekundäre Bodenstück von dem zugehörigen Hauptbodenstück durch einen freien, offenen Raum getrennt ist, der im Schadensfall das Vermischen des Wassers mit dem Kraftstoff verhindert.

2. Vorrichtung nach Anspruch 1, dadurch gekennzeichnet, daß die Wärmezuführrohre, die zu dem Wasserkreislauf gehören, im Innern eine oder mehrere schraubenförmige Zwischenwände aufweisen, um den Wärmeaustausch zu verbessern.

FIG.1

## FIG.2

## FIG.4

EP 0 177 842 B1

# FIG.3

EP 0 177 842 B1